Europäisches Patentamt

European Patent Office

Office européen des brevets

(11) Publication number : **0 469 806 A2**

## (12) EUROPEAN PATENT APPLICATION

(21) Application number : **91306884.7**

(22) Date of filing : **26.07.91**

(51) Int. Cl.⁵ : **H04N 5/92**

(30) Priority : **31.07.90 JP 203470/90**

(43) Date of publication of application :
**05.02.92 Bulletin 92/06**

(84) Designated Contracting States :
**DE FR GB**

(71) Applicant : **SONY CORPORATION**
**7-35 Kitashinagawa 6-Chome Shinagawa-ku**
**Tokyo 141 (JP)**

(72) Inventor : **Sase, Masatoshi, c/o Patents**
**Division**
**Sony Corporation, 6-7-35, Kitashinagawa**
**Shinagawa-ku, Tokyo 141 (JP)**

(74) Representative : **Thomas, Christopher Hugo et**
**al**
**D Young & Co 10 Staple Inn**
**London WC1V 7RD (GB)**

(54) **Apparatus and methods for recording video signals on magnetic tape.**

(57)   In an apparatus and method for recording at least parts of first and second video signals ($S_3$, $S_4$) on a magnatic tape (TP), at least a part of the first video signal ($S_3$) is recorded in a first portion of an oblique track on the tape (TP), and at least a part of the second video signal ($S_4$) is recorded in a second portion of the track (R) on the tape (TP), the at least part of the second video signal ($S_4$) being recorded in a digital form.

EP 0 469 806 A2

FIG.1A

FIG.1

FIG.1A  FIG.1B

FIG.1B

This invention relates to apparatus and methods for recording video signals on magnetic tape.

Known 8-mm video tape recorders (VTRs) record colour video signals (for example, in NTSC format) superimposed with an audio signal and a tracking signal along a first longitudinally extending portion of each of a plurality of oblique tracks formed on a magnetic tape and in such a manner that these signals may be separated upon reproduction. In a separate, second portion of each oblique track, spaced longitudinally from the first portion, a pulse-code modulated (PCM) audio signal is recorded.

Known electronic cameras convert a video signal representing a still picture into digital format and record it on a magnetic recording medium. Accordingly, unlike older halide film cameras whose images must be developed, the still picture images recorded by the electronic camera may be played back for viewing on a monitor receiver, such as a television receiver or the like, so that the user may view the still image immediately.

When the video signal representing the still image produced by the electronic camera is recorded on magnetic video tape and later reproduced therefrom, it frequently includes a jitter component resulting from timebase fluctuation. As a consequence, the quality of the image produced by the reproduced video signal is poorer than that produced when the video signal is supplied directly to a monitor receiver without first being recorded and reproduced from video tape. Accordingly, when a video signal representing a still picture is reproduced from magnetic tape and supplied to a video printer to produce a hard copy, the image quality of the hard copy is often unsatisfactory. In addition, while the known electronic camera is able to produce a high quality video signal representing a still picture, it is incapable of recording a motion picture signal, such as an ordinary NTSC video signal having a field duration of one-sixtieth of a second.

With the use of known apparatus, moreover, it is not possible simultaneously to record, for example, an ordinary NTSC video signal together with an extended definition TV (EDTV) video signal, since the EDTV signal employs many more scanning lines than does the NTSC signal. Accordingly, the usefulness of known VTRs is limited to the recording of standard motion picture video signals, while that of the electronic camera is limited to the production of video still pictures.

According to the present invention there is provided an apparatus for recording at least parts of first and second video signals on a magnetic tape, the apparatus comprising:
a first recording means for recording at least a part of said first video signal in a first portion of an oblique track on said tape; and a second recording means for recording at least a part of said second video signal in a second portion of said track, said at least part of said second video signal being recorded by said second recording means in a digital form.

According to the present invention there is also provided a method of recording at leats parts of first and second video signals on a magnetic tape, the method comprising the steps of:
recording at least a part of the first video signal in a first portion of an oblique track on said tape; and recording at least a part of the second video signal in digital form in a second portion of said track.

Embodiments of the present invention can provide methods and apparatus for recording a first video signal representing a motion picture together with a second video signal representing a high quality still image on the same magnetic recording medium, and for selectively reproducing the first and second video signals therefrom as desired.

The invention will now be described by way of example with reference to the accompanying drawings, throughout which like parts are referred to by like references, and in which:

Figure 1, comprising Figures 1A and 1B, is a block diagram of a video tape recording apparatus in accordance with a first embodiment of the present invention;

Figure 2 is a diagrammatic view of a rotary magnetic head assembly;

Figure 3 is a diagrammatic view of oblique recording tracks formed on magnetic tape; and

Figure 4 is a detailed diagrammatic view of the recording format of each of the oblique recording tracks illustrated in Figure 3 .

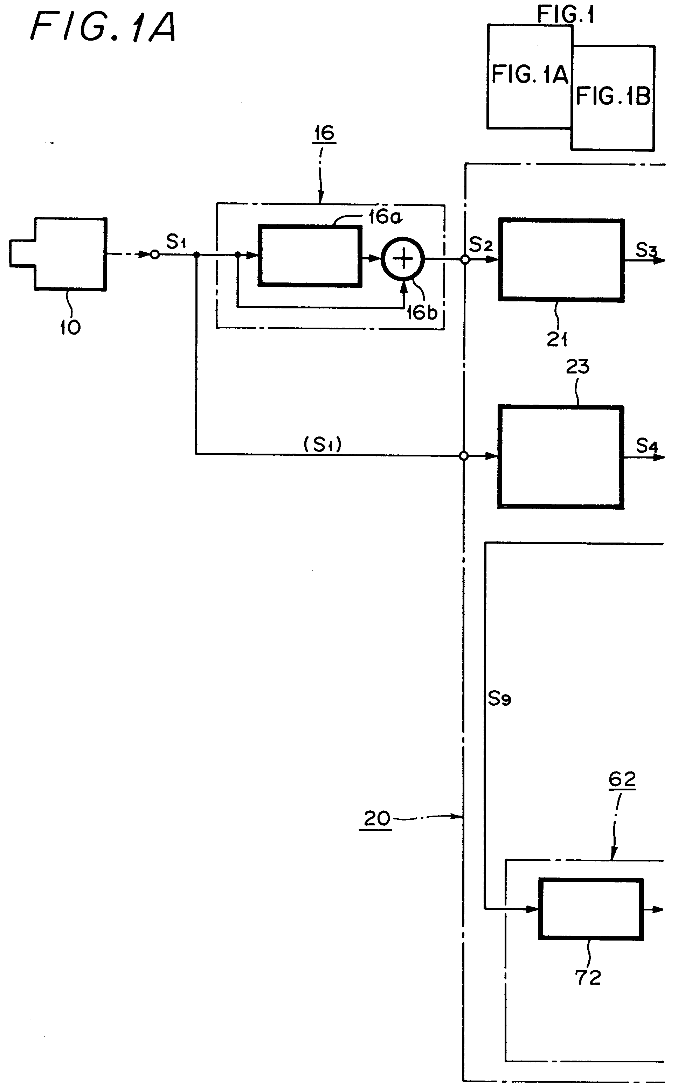

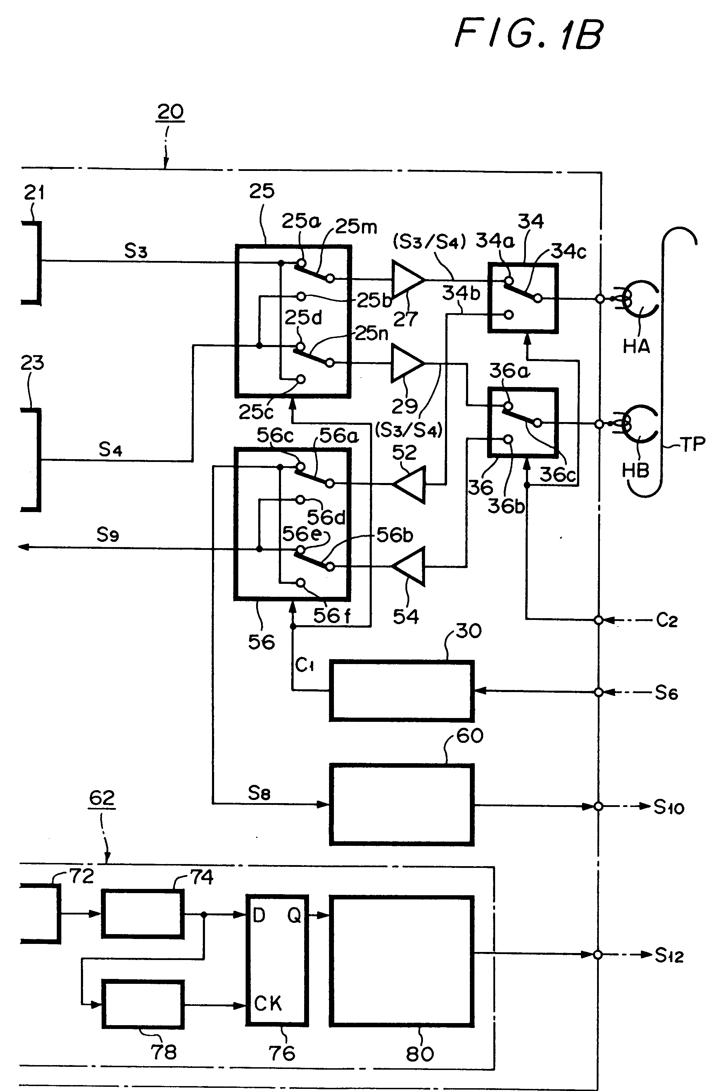

Referring to Figures 1A and 1B, it will be seen that a high resolution video camera 10 is arranged to pick up the image of an object (not shown) and produces a high resolution video signal $S_1$ representing such image. The signal $S_1$ is supplied by the camera 10 in accordance with the extended definition TV (EDTV) system, such that each frame thereof possesses a relatively large number (525) of scanning lines.

The signal $S_1$ is provided at an output of the camera 10 which is coupled with the input of a signal converting unit 16 operative to convert the signal $S_1$ to an interlaced scanning signal $S_2$ substantially complying with the NTSC format. The unit 16 includes a delay circuit 16a operative to delay the signal $S_1$ by one horizontal scanning line period (1H) as supplied at an output thereof. The output of the delay circuit 16a is coupled with a first input of an adding circuit 16b having a second input coupled with the input of unit 16 to receive the signal $S_1$. The adding circuit 16b is, thus, operative to combine a current scan line of the signal $S_1$ with the next previous scan line thereof to produce the interlaced scanning signal $S_2$ which is supplied by the adding circuit 16b to the output of the unit 16.

A recording and reproducing signal processing unit 20 has a first input terminal coupled with the output of unit 16 to receive the signal $S_2$ and a second

input terminal coupled with the output of the camera 10 to receive the high resolution video signal $S_1$. The processing unit 20 is configured similarly to the main portion of a recording and reproducing signal processing unit of an 8-mm VTR and is operative to condition the successive scan lines of the signal $S_2$ for recording on magnetic tape as a motion picture video obtained by producing a sequence of video signals from sequential images received by the camera 10. Unlike the signal processing circuitry of the known 8-mm VTR, however, the unit 20 is operative to convert the high resolution video signal $S_1$ received at its second input terminal into a PCM video signal which is compressed for recording in distinct portions of the same recording tracks in which an NTSC-type signal corresponding to the signal $S_2$ is recorded.

The unit 20 includes an NTSC recording signal processing unit 21 which is coupled with the first input terminal of unit 20 to receive the signal $S_2$ and is operative to produce an NTSC-type recording signal $S_3$ at an output thereof by superimposing a colour video signal derived from the signal $S_2$ with an audio signal and a tracking signal.

Known 8-mm VTRs have the capability to record PCM audio data derived by pulse code modulating an analogue audio input signal. Unlike the known apparatus, however, the unit 20 includes a high image quality recording signal processing unit 23 for converting the high resolution video signal $S_1$ when it receives from the second input terminal of the unit 20, into a PCM signal which the unit 23 supplies at an output thereof as a high quality image video signal $S_4$.

The unit 23 first digitizes the signal $S_1$ and stores the resulting digital data in a frame memory of the unit 23. The writing and reading operations of the frame memory are controlled by a memory controller of the unit 23. A user operable switch (not shown) is coupled with the memory controller which enables the user to select a still image viewed by the camera 10 for storage in the frame memory to be recorded as the signal $S_4$.

The stored digital data are then divided into blocks, and parity words P and Q serving as error-correction codes as well as a cyclic redundancy check (CRC) code are added to each block. Each field of data is timebase-compressed to one-fifth the original amount thereof, and a block synchronizing (sync) signal and a block address signal are added to each block of data. Each resulting block includes a 3-bit block sync signal, an 8-bit block address word, the error-correction parity words P and Q, a suitable number of video data words and the CRC code including 163 bits. The digital data in block format is output by the unit 23 as the signal $S_4$ which is then recorded in a plurality of oblique tracks on an 8-mm magnetic tape. The unit 23 may, for example, be as disclosed in our US patent application 660,957, the disclosure of which is incorporated in its entirety herein by reference.

A switching circuit 25 of the unit 20 includes first and second movable contacts 25m and 25n each switchable between respective first fixed contacts 25a and 25d and respective second fixed contacts 25b and 25c in response to a switching signal received at a control input of the circuit 25. Fixed contacts 25a and 25c are each coupled with the output of the unit 21 to receive the signal $S_3$, while fixed contacts 25b and 25d are each coupled with the output of the unit 23 to receive the signal $S_4$.

A switching signal generating unit 30 has an input coupled to receive a 30 Hz pulse signal $S_6$ indicating the rotary phase of a pair of rotary magnetic recording and reproducing heads HA and HB. The unit 30 serves to produce a switching signal $C_1$ at an output thereof in response to the pulse signal $S_6$. The output of the unit 30 is coupled with the control input of the circuit 25 to supply the switching signal $C_1$ thereto in order to cause the movable contacts 25m and 25n alternately to couple the signals $S_3$ and $S_4$ to each of recording and reproducing heads HA and HB for recording the signal $S_3$ and a portion of the signal $S_4$ in an NTSC motion picture recording area and an EDTV recording area, respectively, of each of a plurality of tracks formed by the heads HA and HB on a magnetic tape TP.

The movable contacts 25m and 25n are each coupled with an input terminal of a respective one of a pair of recording amplifiers 27 and 29. An output of the amplifier 27 is coupled with a first fixed input terminal 34a of a first recording/reproducing change-over switching circuit 34, whereas an output of the amplifier 29 is coupled with a first fixed input terminal 36a of a second recording/reproducing change-over switching circuit 36. Each of the circuits 34 and 36 includes a respective movable contact 34c and 36c which is controllable coupled to the corresponding one of fixed contacts 34a and 36a in a recording mode of the VTR apparatus in response to a recording state of a recording/reproducing switching signal $C_2$ as determined by the user. Each of the heads HA and HB is coupled with a respective one of the movable contacts 34c and 36c, so that in the recording mode, the heads HA and HB are alternately provided with the signals $S_3$ and $S_4$ for recording on the tape TP.

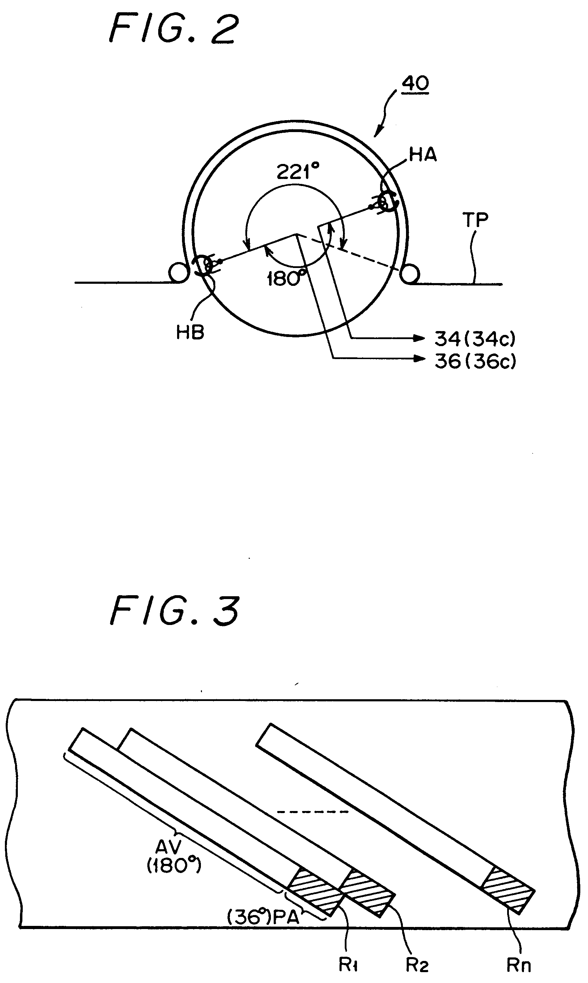

Referring to Figure 2, a rotary head assembly 40 which serves to record the signals $S_3$ and $S_4$ on the tape TP using the heads HA and HB, is illustrated therein. Referring also to Figure 3, an 8-mm video format employed in recording the signals $S_3$ and $S_4$ in oblique tracks formed by the heads HA and HB on the tape TP is illustrated generally therein.

The head assembly 40 is shaped generally as a cylindrical drum and has the rotary magnetic recording and reproducing heads HA and HB mounted thereon in a circumferentially opposing fashion (that is, so that the heads HA and HB are angularly spaced by 180°). The tape TP is wrapped helically about the head assembly 40 to an angular extent of 221°, as illustrated in Figure 2, so that the heads HA and HB in a recording mode form a succession of oblique recording tracks $R_1$, $R_2$, ..., $R_n$ on the tape TP. Each of the tracks $R_1$, $R_2$, ..., $R_n$, as shown in Figure 3, includes a portion PA extending angularly approximately 36° from an initial scanning position of a respective one of the heads HA and HB which is allocated for the recording of a part of the high quality image video signal $S_4$ thus constituting an EDTV recording area, and a portion AV extending angularly approximately 180° from a final scanning position of the portion PA and which is allocated for the recording of the signal $S_3$, thus constituting an NTSC motion picture recording area. When a respective one of the heads HA and HB reaches the final scanning position of the portion PA as it records a respective one of the tracks $R_1$, $R_2$, ...,$R_n$, the circuit 25 is operative to switch the respective movable contacts 25m and 25n to which the heads HA and HB are then coupled in order thereby to supply the signal $S_3$ to the respective one of the heads HA and HB for recording in the portion AV (rather than the signal $S_4$ which has been recorded just prior thereto in the portion PA), so that the portions PA and AV together form a single, substantially continuous oblique recording track $R_1$, $R_2$, ..., $R_n$.

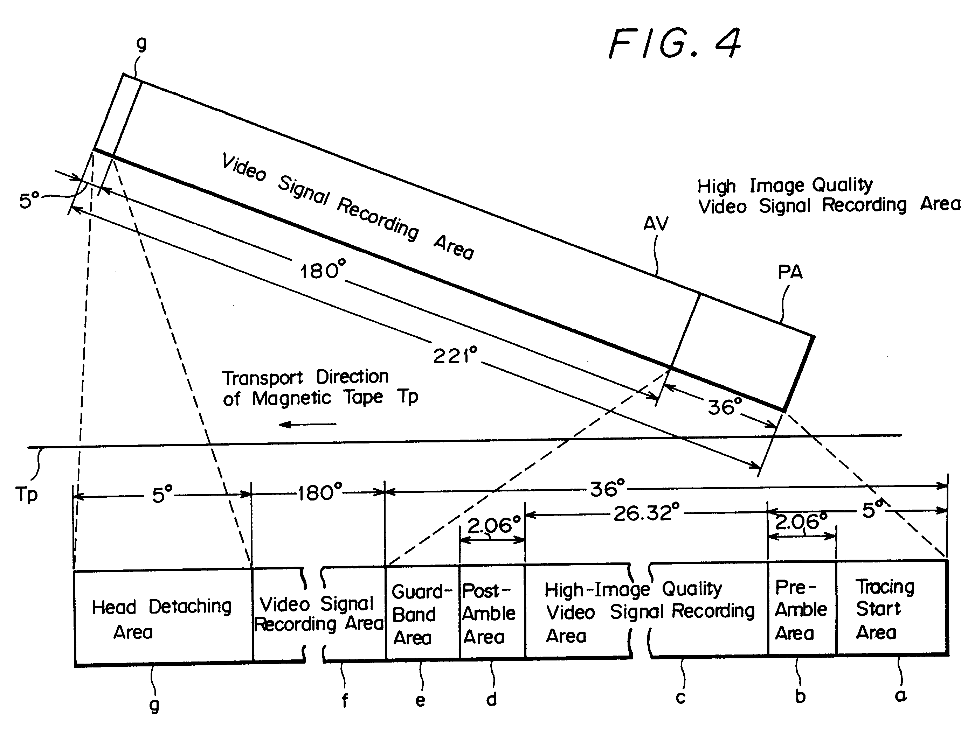

Referring to Figure 4, the recording format for each of the tracks $R_1$, $R_2$, ..., $R_n$ is illustrated diagrammatically therein in greater detail. In each track, an initial tracing area a extends angularly for 2.94°, followed by a preamble area b of 2.06° (corresponding to three horizontal periods of the video signal $S_3$). The preamble area b serves as a clock run-in portion for synchronizing with the PCM modulated high quality image video signal $S_4$. The area b is followed in scanning order by a PCM data recording area c having an angular extent of 26.32°. Area c is followed by a postamble area d of 2.06° which serves as a back margin area to compensate for displacement of the recording position in the after-recording mode. Following area d is a guard band area e of 2.62° which segments the respective recording areas of the signals $S_3$ and $S_4$. Immediately thereafter, a recording area f extending for 180° is provided for recording the video signal $S_3$, followed by a head detaching area g of 5°.

With reference agin to Figures 1A and 1B, a reproduced signal processing system incorporated in the unit 20 will now be described.

The reproduction mode of the VTR apparatus illustrated in Figures 1A and 1B is selected through operation of a user control (not shown) which serves to place the recording/reproducing switching signal $C_2$ in a reproduction mode state. In response thereto, the circuits 34 and 36 couple their movable contacts 34c and 36c to respective fixed contacts 34b and 36b thereof. Thereupon, a reproduced NTSC-type signal $S_8$ and a reproduced high quality image video signal $S_3$ corresponding respectively to the NTSC-type recording signal $S_3$ and the high quality image video signal $S_4$ and read from the tape TP by the heads HA and HB are supplied to the fixed contacts 34b and 36b through the movable contacts 34c and 36c.

The fixed contact 34b is coupled with the input of a playback amplifier 52 whose output is coupled with a movable contact 56a of a double-circuit, double-contact switching circuit 56. The fixed contact 36b is coupled with the input of a further playback amplifier 54 whose output is coupled with a second movable contact 56b of the circuit 56. The circuit 56 has a control input terminal coupled to the output of the unit 30 to receive the switching signal $C_1$ in order controllably to switch the movable contact 56a between fixed contacts 56a and 56d, as well as to switch the movable contact 56b between fixed contacts 56e and 56f. As noted hereinabove, the switching signal $C_1$ is produced in response to the pulse signal $S_6$ which is synchronized with the rotational phase of the heads HA and HB. In response to the switching signal $C_1$, the movable contacts 56a and 56b are respectively coupled with fixed terminals 56c and 56f whenever the corresponding one of the heads HA and HB outputs the signal $S_8$ corresponding with the signal $S_3$, whereas the movable contacts 56a and 56b are respectively coupled with the fixed terminals 56d and 56e in response to the switching signal $C_1$ whenever the respective head HA and HB supplies the signal $S_9$ corresponding with the signal $S_4$.

The fixed terminals 56c and 56f are both coupled to the input of a reproduced video signal processing unit 60 to provide the signal $S_8$ thereto. The unit 60 is operative to convert the signal $S_8$ into the form of an NTSC video signal $S_{10}$ which is supplied by the unit 60 to an output terminal of the unit 20.

Fixed terminals 56d and 56e are both coupled with an input of a high quality image reproduced signal processing unit 62 to supply the reproduced high quality image video signal $S_9$ thereto for conversion to a high quality analogue image signal $S_{12}$ which the unit 62 supplies to an output terminal of the unit 20. The unit 62 includes a playback equalizer circuit 72 coupled to receive the signal $S_9$ from the input of the unit 62 for supplying an equalized output signal to the input of a limiter circuit 74. After appropriate signal limiting, the limiter circuit 74 supplies its output to the D input terminal of a D-type flip-flop circuit 76, as well as to the input of a phase-locked loop (PLL) circuit 78 which supplies its output to the clock (CK) input of the flip-flop 76. The flip-flop 76 and the PLL circuit 78 together constitute a bit synchronizing circuit for carrying out bit synchronization of the reproduced high quality image video signal $S_9$ supplied at the output of the limiter circuit 74. The bit-synchronized signal $S_9$ is supplied at the Q output of the flip-flop 76 which is coupled with the input of a PCM signal processing unit 80 which serves to carry out error-detection and error-correction of the signal $S_9$, and then converts the signal $S_9$ into the high quality analogue image signal $S_{12}$ which is provided at the output of the unit 20.

The NTSC video signal $S_{10}$ may be supplied to any appropriate NTSC monitor receiver to display a reproduced video motion picture. The high quality analogue image signal $S_{12}$, on the other hand, may be supplied to a high image quality monitor receiver for display and/or may be supplied to a video printer to reproduce the image represented thereby in hard copy.

The operation of the VTR apparatus described above is summarized as follows:

The high resolution video signal $S_1$ produced by the camera 10, as well as the interlaced scanning signal $S_2$ produced by the unit 16 from the signal $S_1$, are supplied to the unit 20 for conversion to the NTSC-type recording signal $S_3$ and the high quality image video signal $S_4$, respectively, which are then time domain multiplexed by the unit 20 for recording in corresponding portions of each of a series of oblique recording tracks formed by the heads HA and HB on the tape TP.

More specifically, in the unit 20, the NTSC recording signal processing unit 21 converts the interlaced scanning signal $S_2$ into the signal $S_3$ in which a colour video signal derived from the signal $S_2$ is superimposed with an audio signal and a tracking signal. Simultaneously, the unit 23 converts the high resolution video signal $S_1$ into the PCM high quality image video signal $S_4$. The NTSC-type recording signal $S_3$ and a portion of the high quality image video signal $S_4$ are supplied to the circuit 25 which serves to combine the signals $S_3$ and $S_4$ to form a pair of continuous-timebase recording signals supplied to the heads HA and HB, respectively, for recording on the tape TP. In this manner, each of the oblique recording tracks formed by the heads HA and HB includes a first portion (or EDTV recording area) in which a part of the PCM signal $S_4$ is recorded, followed by a second portion (or NTSC motion picture recording area) in which one field of the signal $S_3$ is recorded.

Thereafter, at a desired time, the heads HA and HB reproduce the recorded signals $S_3$ and $S_4$ as the signals $S_8$ and $S_9$ which are converted into the NTSC video signal $S_{10}$ and the high quality analogue image signal $S_{12}$ by the units 60 and 62, respectively. The NTSC video signal $S_{10}$ may then be supplied to an NTSC monitor receiver to produce a video motion picture image, while the high quality analogue image signal $S_{12}$ may be supplied to a high quality image monitor to produce a video image therefrom and/or to a video printer to produce a hard copy image.

Accordingly, the VTR apparatus disclosed hereinabove is capable of recording and reproducing both a high resolution video signal $S_1$ having a relatively large number of scanning lines, together with an interlaced scanning signal $S_2$ having relatively fewer scanning lines, on the same tape TP. The two separate signals thus recorded may be selectively reproduced as desired for viewing, so that the VTR apparatus provides enhanced recording and reproducing capabilities as well as convenient operation.

While in the embodiment disclosed above, the high quality image video signal $S_4$ is recorded as a timebase-compressed signal, it is also within the scope of the invention to record such a signal without timebase compression. The uncompressed signal is digitized and divided into one hundred separate portions for recording during the same number of field periods in one hundred separate tracks or the tape TP in a time division manner, so that an image of relatively higher quality than that represented by the signal $S_4$ may thus be recorded.

It will be appreciated that the electronic circuitry may be implemented in whole or in part using either analogue or digital circuitry, and that all or part of the signal processing functions thereof may be carried out either be hardwired circuits or with the user of a microprocessor, microcomputer or the like.

## Claims

1. An apparatus for recording at least parts of first and second video signals ($S_3$, $S_4$) on a magnetic tape (TP), the apparatus comprising:

   a first recording means (21) for recording at least a part of said first video signal ($S_3$) in a first portion of an oblique track (R) on said tape (TP); and

   a second recording means (23) for recording at least a part of said second video signal ($S_4$) in a second portion of said track (R), said at least part of said second video signal being recorded by said second recording means (23) in a digital form.

2. Apparatus according to claim 1 wherein said second recording means (21) is operative to record at least a part of a standard television picture as said at least part of said first video signal ($S_3$), and said second recording means (23) is operative to record at least part of an extended definition television signal as said at least part of said second video signal ($S_4$).

3. Apparatus according to claim 2 wherein said first recording means (21) is operative to record at least a part of a standard television picture as said at least part of said first video signal ($S_3$), and said second recording means (23) is operative to record at least part of an extended definition television signal as said at least part of said second video signal ($S_4$).

4. Apparatus according to claim 1 wherein said first recording means (21) is operative to record at least a part of a motion picture video signal in said first portion of said track (R), and said second recording means (23) is operative to record at least a part of a still video picture in said second portion of said track (R).

5. Apparatus according to claim 1 further comprising a video camera (10) for producing said second video signal ($S_4$) from an optical image.

6. Apparatus according to claim 5 further comprising signal converting means (16) for producing said first video signal ($S_3$) from said second video signal ($S_4$).

7. Apparatus according to claim 6 wherein said camera (10) is operative to produce said second video signal ($S_4$) as a high resolution video signal and said signal converting means (16) is operative to produce said first video signal ($S_3$) as an interlaced scanning signal from said high resolution video signal ($S_4$).

8. A method of recording at leats parts of first and second video signals ($S_3$, $S_4$) on a magnetic tape (TP), the method comprising the steps of:
   recording at least a part of the first video signal ($S_3$) in a first portion of an oblique track (R) on said tape (TP); and
   recording at least a part of the second video signal ($S_4$) in digital form in a second portion of said track (R).

9. A method according to claim 8 wherein the steps of recording at least parts of the first and second video signals ($S_3$, $S_4$) comprise recording at least parts of the first and second video signals ($S_3$, $S_4$) in respective first and second portions of a plurality of oblique tracks (R) successively formed on said tape (TP).

10. A method according to claim 8 wherein the step of recording at least part of the first video signal ($S_3$) comprises recording at least part of an analogue video signal (AV) in said first portion of said track (R).

11. A method according to claim 10 wherein the step of recording at least part of an analogue video signal (AV) comprises recording at least part of an NTSC analogue video signal (AV) in said first portion of said track (R).

12. A method according to claim 11 wherein the step of recording at least part of the second video signal ($S_4$) comprises recording at least part of a high definition digital video still picture signal (PA) in said second portion of said track (R).

13. A method according to clam 8 wherein the step of recording at least part of the second video signal ($S_4$) comprises recording at least part of a high definition digital video still picture signal (PA) in said second portion of said track (R).

14. A method according to claim 8 further comprising the step of producing said second video signal ($S_4$) from an optical image.

15. A method according to claim 14 further comprising the step of producing said first video signal ($S_3$) from said second video signal ($S_4$).

16. A method according to claim 15 wherein the step of producing said second video signal ($S_4$) from an optical image comprises forming a high resolution video signal ($S_1$), and wherein the step of producing said first video signal ($S_3$) comprises producing an interlaced scanning signal from said high resolution video signal ($S_1$).

# FIG.1A

# FIG. 1B

# FIG. 2

40

221°

HA

TP

180°

HB

34(34c)

36(36c)

# FIG. 3

AV
(180°)

(36°)PA

R1    R2    Rn

FIG. 4

High Image Quality
Video Signal Recording Area

EP 0 469 806 A2